# EUROPÄISCHE PATENTSCHRIFT

(11) **EP 2 274 177 B1**
(45) Veröffentlichungstag und Bekanntmachung des Hinweises auf die Patenterteilung: **23.04.2014**
(21) Anmeldenummer: 09738108.1
(22) Anmeldetag: 27.04.2009
(51) Int. Cl.: B60G 7/00, F16D 51/02, F16H 25/20

(54) **FAHRWERKSAKTUATOR**
SUSPENSION ACTUATOR
ACTIONNEUR DE CHÂSSIS

(30) Priorität: 02.05.2008 DE 102008021861
(43) Veröffentlichungstag der Anmeldung: 19.01.2011
(73) Patentinhaber: Schaeffler Technologies GmbH & Co. KG, 91074 Herzogenaurach (DE)
(72) Erfinder: OSTERLÄNGER, Jürgen, 91448 Emskirchen (DE); MAYER, Ralf, 91074 Herzogenaurach (DE); KRAUS, Manfred, 91074 Herzogenaurach (DE); MEHLIS, Thomas, 91077 Kleinsendelbach (DE); BÄRTHLEIN, Stefanie, 91460 Baudenbach (DE); SCHMIDT, Meinhard, 91126 Kammerstein (DE); DIRNBERGER, Thomas, 90587 Obermichelbach (DE); NOSS, Tobias, 49088 Osnabrück (DE); HEINRICH, Falk, 02977 Hoyerswerda (DE)
(86) Internationale Anmeldenummer: PCT/EP2009/055055
(87) Internationale Veröffentlichungsnummer: WO 2009/133064

(56) Entgegenhaltungen:
- EP-A- 0 258 571
- EP-A- 1 186 800
- DE-A1- 10 144 111
- DE-A1-102005 023 250
- JP-A- 2008 303 963
- US-A- 5 083 626

## Beschreibung

### Gebiet der Erfindung

Die Erfindung betrifft einen Fahrwerksaktuator zum Stellen eines beweglich gelagerten Bauteils eines Kraftfahrzeugfahrwerks, umfassend ein mit dem beweglich gelagerten Bauteil zu verbindendes erstes Aktuatorbauteil und ein mit einem lagefesten Fahrwerksbauteil zu verbindendes zweites Aktuatorbauteil, wobei beide Aktuatorbauteile über einen Kugelgewindetrieb umfassend eine Gewindespindel und eine auf dieser laufende Mutter, wobei entweder die Mutter über einen Antriebsmotor zur Axialverstellung der Gewindespindel oder die Spindel über den Antriebsmotor zur Axialverstellung der Mutter antreibbar ist, axial relativ zueinander verstellbar sind.

### Hintergrund der Erfindung

Ein solcher Fahrwerksaktuator wird in Fahrwerken von Kraftfahrzeugen eingesetzt, beispielsweise an einer Radaufhängung eines Fahrzeugrades. Über den Fahrwerksaktuator, der eigenständig ansteuerbar ist, ist eine gewünschte Verstellung des fahrwerksseitigen, beweglich gelagerten Bauteils wie beispielsweise eines Radträgers oder dergleichen möglich. Ein hierfür geeigneter Fahrwerksaktuator, wie er beispielsweise aus DE 10 2005 023 250 A1 bekannt ist, verfügt über zwei Aktuatorbauteile, wobei ein erstes Aktuatorbauteil mit dem zu verstellenden Fahrwerksbauteil und ein zweites Aktuatorbauteil mit einem lagefesten Fahrwerksbauteil verbunden ist, dort also am Fahrzeugaufbau abgestützt ist. Beide Aktuatorbauteile können axial relativ zueinander verstellt werden, wozu ein Kugelgewindetrieb dient. Dieser umfasst eine Gewindespindel, über die beide Aktuatorbauteile verbunden sind, sowie eine auf dieser laufende Mutter, die auf der Spindel über dazwischen befindliche Kugeln läuft. Zur Axialverstellung der Spindel und damit zum Auseinanderbewegen bzw. Zusammenführen der Aktuatorbauteile für die gewünschte Fahrwerksverstellung dient ein Antriebsmotor, der die lagefeste Mutter dreht, was zur Axialbewegung der Spindel relativ zur lagefesten Mutter führt. Eine andere Ausführung sieht eine lagefeste, über den Antriebsmotor drehangetriebene Spindel vor, während die Mutter, die mit dem zu stellenden Fahrwerksteil verbundne ist, axial bewegt wird. Solche Fahrwerksaktuatoren - üblicherweise ist jedem Rad ein eigener, separat ansteuerbarer Fahrwerksaktuator zugeordnet - übernehmen sicherheitsrelevante Aufgaben, weshalb grundsätzlich die Forderung besteht, dass die angelenkten Fahrwerksbauteile beispielsweise bei Ausfall eines Aktuators keine unerwünschten Stellbewegungen durchführen, sondern in der zuletzt eingestellten Position gehalten werden. Ebenso muss sichergestellt werden, dass Außenkräfte, die über das Fahrwerk in den Aktuator rückwärts eingeleitet werden, sicher aufgefangen werden, ohne dass der Aktuator aufgrund dieser äußeren Kräfte unerwünschte Stellbewegungen durchführt.

Zu diesem Zweck ist bei einem Fahrwerksaktuator gemäß DE 10 2005 023 250 A1 ein Gesperre in Form einer mechanischen Rampensperre vorgesehen, das schaltbar ausgeführt ist. Dieses Gesperre blockiert das Antriebsteil, also die Mutter, wenn die Antriebskraft des Aktuators, die entweder vom Antriebsmotor aufgebracht wird, oder die bei gerade nicht erfolgender Verstellung 0 ist, kleiner ist als eine äußere, an der Mutter angreifende Außenkraft. Wenn beispielsweise der dort beschriebene Fahrwerksaktuator zur aktiven Verstellung des Radsturzes eines Rades eines Kraftfahrzeugs verwendet wird, werden beispielsweise von außen in das Rad eingeleitete Stöße lediglich bis zu dem Abtriebsteilt, also der Mutter des Aktuators weitergeleitet. Eine Einleitung dieser Stoßkräfte in den Aktuator bis zum Motor ist ausgeschlossen, da das Abtriebsteil, also die Mutter, durch das Gesperre blockiert ist. Die Stoßkräfte werden über das Gesperre in das lagefeste Fahrwerk selbst eingeleitet. Das Gesperre selbst ist bei dem bekannten Fahrwerksaktuator als Klemmrollengesperre ausgeführt und umfasst einen mit Klemmrampen versehenen Klemmring und ein hohlzylindrisches Teil mit einer zylindrischen Klemmbahn, die gemeinsam mit dem Klemmrampenteil die Klemmspalt bildet, in denen die Klemmrollen angeordnet sind, die mit den Klemmrampen in und außer Klemmeingriff schaltbar sind. Die Klemmrollen selbst stehen in ständiger Klemmbereitschaft, wozu sie mit Federn vorgespannt sind.

Zwar kann mit einem solchen Klemmrollengesperre die gewünschte Aktuatorsperre realisiert werden, die die eingangs genannten Anforderungen erfüllt. Jedoch kennt ein solches Klemmgesperre mit Klemmrampen im Prinzip nur zwei Stellungen, nämlich die Sperrstellung oder die Lösestellung. Hieraus können Probleme resultieren, wenn die Spindel in Lastrichtung verstellt werden soll, d. h., dass eine externe Kraft anliegt, die in Stellrichtung wirkt. Dies führt dazu, dass es zu einem sogenannten "Sperrrucken" kommt. Denen die Last überholt ständig den Antrieb, d. h., dass über die externe Last ständig die Klemmrollen in die Klemmstellung gebracht werden. Wenn der Antriebsmotor die Last quasi wieder "eingeholt" hat, öffnet der Motor das Klemmgesperre wieder, woraufhin die Last den Antrieb erneut überholt uns es wiederum zum Sperren des Gesperres kommt, und so fort. Dies ist jedoch in vielen Anwendungen nachteilig bzw. nicht zulässig.

DE 101 44 111 A1 offenbart eine elektromechanische Niveauregulierung eines Kraftfahrzeugs, wobei eine Feder zwischen einer ersten Anlagestelle an einem Fahrzeugaufbau und einer zweiten Anlagestelle an einem Radträger angeordnet ist. Dabei ist die erste Anlagestelle mittels eines Elektroantriebs gegenüber dem Fahrzeugaufbau verstellbar, indem der Elektroantrieb einen mit der ersten Anlagestelle verbundenen Gewindetrieb betätigt. Der Gewindetrieb ist als Spindeltrieb mit einer von dem Elektroantrieb antreibbaren Spindel und einer fest mit der ersten Anlagestelle verbundenen Spindelmutter ausgebildet.

### Zusammenfassung der Erfindung

Der Erfindung liegt damit das Problem zugrunde, einen Fahrwerksaktuator anzugeben, der das Auftreten des Sperrruckens vermeidet und ein ruckfreies Stellen auch bei externer anliegender Last ermöglicht.

Zur Lösung dieses Problems ist bei einem Fahrwerksaktuator der eingangs genannten Art erfindungsgemäß vorgesehen, dass eine durch eine auf die Mutter oder die Spindel wirkende und diese verdrehende externe fahrwerksseitige Kraft betätigbare Bremseinrichtung, die ein einer Mutterdrehung oder einer Spindeldrehung entgegenwirkendes Reibmoment aufbaut, das zwischen der Mutter oder der Spindel und einem lagefesten Aktuatorelement oder zwischen einer Antriebswelle des Antriebsmotors und einem diesem zugeordneten lagefesten Aktuatorelement wirkt, vorgesehen ist, wobei die Bremseinrichtung eine Schlingfeder umfasst, die zum Aufbauen des Reibmoments das lagefeste zylindrische Aktuatorelement umschlingt, und die mit dem Antriebsmotor zum Lösen der Umschlingung und mit der Mutter oder der Spindel zum Schließen der Umschlingung gekoppelt ist.

über die erfingdungsgemäß vorgesehene Bremseinrichtung ist es möglich, ein vom Grad der Beanspruchung der Bremseinrichtung, also von der Höhe der externen fahrwerksseitigen Kraft abhängiges Reibmoment aufzubauen, das einer Mutterdrehung oder der Spindeldrehung - je nachdem welches Element mit der externen Kraft belastet ist und sich ungewünscht selbst verstellen würde - entgegenwirkt. Dieses Reibmoment kann letztlich so groß werden, dass die Bremseinrichtung vollständig blockiert, mithin also als Sperreinrichtung fungiert. Über dieses veränderliche Reibmoment ist es möglich, auch bei einer Verstellung in Richtung einer externen Last eine ruckfreie Stellbewegung durchzuführen, nachdem über das sich aufbauende Reibmoment zwar ein Bremseffekt erzielt wird, jedoch letztlich eine gebremste Stellbewegung trotz allem möglich ist. Ein echtes Sperren setzt nur dann ein, wenn der Antriebsmotor selbst nicht betätigt wird, mithin also keine Stellbewegung erfolgen soll. Die Bremseinrichtung baut dann ein so hohes Reibmoment auf, dass eine Mutterndrehung oder eine Spindeldrehung vollständig verhindert wird. Im Falle einer vorzunehmenden Stellbewegung und Anliegen einer externen Kraft erzeugt die Bremseinrichtung ein entgegengesetztes Reibmoment, das jedoch vom stellenden Antriebsmotor, der also die Mutter oder die Spindel je nach Ausführungsform selbst aktiv dreht, quasi "überdreht" wird, so dass es lediglich zu einer gebremsten Mutterdrehung kommt, die jedoch nicht vollständig gesperrt wird.

Somit kann mit einer solchen, hinsichtlich der "Bremskraft" quasi variablen integrierten Bremseinrichtung mit besonderem Vorteil das Sperrrucken, das bei Aktuatoren des Standes der Technik, die Klemmrollengesperre verwenden, auftritt, vermieden werden, so dass ein solcher erfindungsgemäßer Fahrwerksaktuator besonders für sicherheitstechnische Stellaufgaben geeignet ist, wie sie im Fahrwerksbereich, insbesondere im Bereich der Radverstellung respektive Radlenkung, gegeben sind.

Denkbar ist dabei, die Bremseinrichtung unmittelbar im Mutter- oder Spindelbereich zu integrieren, also quasi axial anzuordnen. Alternativ kann die Bremseinrichtung aber auch im Bereich des versetzt dazu vorgesehenen Antriebsmotors, der mit der Mutter oder der Spindel z.B. über einen Riemen oder ein Getriebe verbunden ist, vorgesehen werden, wo sie auf die Verbindung der Motorabtriebswelle zum Riemen- oder Getriebetrieb wirkt.

Die Bremseinrichtung selbst umfasst eine Schlingfeder, die zum Aufbauen des Reibmoments das lagefeste zylindrische Aktuatorelement umschlingt, und die mit dem Antriebsmotor zum Lösen der Umschlingung und mit der Mutter oder der Spindel zum Schließen der Umschlingung gekoppelt ist. Es handelt sich hierbei also um eine Schlingfedersperre unter Verwendung einer Schlingfeder oder eines Schlingbandes, das mit dem lagefesten zylindrischen Aktuatorelement, beispielsweise in Form eine Hülse oder eines Gehäusebauteils, zusammenwirkt.

Zum Betätigen der Schlingfeder ist ein Öffnungselement und ein Schließelement vorgesehen, wobei das Öffnungselement über den Antriebsmotor verdrehbar ist und an jeweils einem der beiden abgewinkelten Federenden der Schlingfeder angreift, je nach Drehrichtung des Antriebsmotors bzw. des Öffnungselements. Hierüber wird die Schlingfeder geöffnet, d. h., sie wird aus ihrer Reibanlage am lagefesten zylindrischen Aktuatorelement gelöst, so dass ein reibmomentarmes Drehen der Mutter oder der Spindel möglich ist. Zum Schließen ist ein drehfest mit der Mutter oder der Spindel verbundenes Schließelement vorgesehen, das bei Einwirken einer zu einer Muttern- oder Spindeldrehung führenden externen Kraft ebenfalls an einem der beiden abgewinkelten Federenden angreift, die Schlingfeder jedoch je nach Funktionsprinzip entweder zusammenzieht oder aufweitet, so dass es zur Reibanlage an dem Aktuatorelement und damit zu erzeugendes Reib- oder Bremsmoment kommt. Sowohl das Öffnungselement als auch die Schlingfeder wie auch das Schließelement sind mutternseitig angeordnet, drehen also im regulären Stellbetrieb, angetrieben über den Antriebsmotor, mit der Mutter oder der Spindel mit. Die drehfeste Verbindung kann quasi direkt bei axialem Aufbau realisiert sein, alternativ ist auch eine indirekte drehfeste Verbindung zwischen Mutter/Spindel und der motorseitigen Bremseinrichtung über den Riemen oder das Getriebe möglich.

Das Öffnungselement und das Schließelement weisen jeweils zwei einander um 180° versetzt gegenüberliegende, vorzugsweise kreisbogenförmige Klauen auf, wobei die Klauen beider Elemente mit leichtem Umfangsabstand ineinandergreifen, wobei die beiden Federelemente jeweils zwischen zwei Klauen positioniert sind. Das Öffnungs- und das Schließelement werden also um die Spindellängsachse verdreht, so dass sich die jeweiligen Klauen ebenso verdrehen und je nach Drehrichtung gegen das eine oder das andere Federelementende bewegt werden, was dazu führt, dass die Schlingfeder entweder geöffnet oder geschlossen, in jedem Fall aber deformiert wird. Der Aufbau mit ineinandergreifenden Klauen ist hinsichtlich einer kompakten Bauform der Bremseinrichtung (die auch als kombiniert Brems- und Sperreinrichtung angesprochen werden kann) zweckmäßig. Die Federenden selbst ragen vorzugsweise radial nach innen, sind also radial nach innen abgewinkelt, was die Übertragung einer höheren Kraft über die Klauen ermöglicht, als bei einer Abwinklung nach außen. Festzuhalten bleibt aber, dass selbstverständlich auch eine Ausgestaltung mit nach außen abgewinkelten Federelementenden und entsprechend ausgebildeten Öffnungs- und Schließelementen respektive entsprechend positionierten Klauen denkbar ist.

Das lagefeste Aktuatorelement selbst ist zweckmäßigerweise an seiner Außenfläche umschlungen, d. h., dass die Schlingfeder zum Sperren zugezogen wird, mithin also in ihrem Innendurchmesser verringert wird, so dass sich die Schlingfeder flächig und reibend mit ihrer Innenseite an die Außenseite des Aktuatorelements, das als Hülse oder dergleichen ausgeführt ist, legt. Zum Öffnen wird die Schlingfeder geweitet, also aufgebogen. Auch hier ist es natürlich denkbar, eine kinematisch umgekehrte Ausgestaltung zu realisieren, bei der das lagefeste Aktuatorelement, beispielsweise als zylindrisches Gehäusebauteil mit seiner zylindrischen Innenwand mit der Schlingfeder zusammen wirkt, die dann zum Erwirken des Bremsmoments, also zum Schließen, aufzuweiten ist, so dass sich ihr Außendurchmesser vergrößert und sich die Federaußenseite an die Elementinnenseite anlegt. Zum Öffnen, also zum Lösen des Reibschlusses ist die Feder zusammenzuziehen, also im Durchmesser wieder zu verringern.

Der Antriebsmotor ist zweckmäßigerweise seitlich an einem Gehäuse des Fahrwerksaktuators angeordnet und mit der Mutter oder der Spindel über ein Zugmittel, insbesondere einen Riemen, oder ein Getriebe gekoppelt. Über diesen Riemen oder das Getriebe kann der Antriebsmotor, vornehmlich ein Elektromotor, die Mutter oder die Spindel für die gewünschte Stellbewegung aktiv antreiben. Alternativ ist es aber auch denkbar, den Antriebsmotor axial anzusetzen, wenn dies die Bauform des Fahrwerksaktuators respektive der vorhandene fahrwerksseitige Bauraum zulässt.

### Kurze Beschreibung der Zeichnung

Ein Ausführungsbeispiel der Erfindung ist in der Zeichnung dargestellt und wird im Folgenden näher beschrieben. Es zeigen:
- Fig. 1: eine Prinzipdarstellung eines erfindungsgemäßen Fahrwerksaktuators im Schnitt,
- Fig. 2: eine Perspektivansicht der Bremseinrichtung mit Schlingfeder,
- Fig. 3: eine Querschnittsansicht durch die Bremseinrichtung aus Fig. 2,
- Fig. 4: eine Längsschnittansicht durch die Bremseinrichtung aus Fig. 2,
- Fig. 5: eine Prinzipdarstellung, teilweise im Schnitt, eines Montagebeispiels eines Fahrwerksaktuators,
- Fig. 6: eine Explosionsdarstellung einer weiteren Ausführungsform einer Bremseinrichtung,
- Fig. 7: eine Querschnittansicht durch die zusammengebaute Bremseinrichtung aus Fig. 6,
- Fig 8: eine Längsschnittansicht durch die Bremseinrichtung,
- Fig. 9: eine Prinzipdarstellung eines erfindungsgemäßen Fahrwerksaktuators im Schnitt einer zweiten Ausführungsform,
- Fig. 10: den Fahrwerksaktuator aus Fig. 9 in einer anderen Arbeitsstellung,
- Fig. 11: eine Explosionsdarstellung einer weiteren Ausführungsform einer Bremseinrichtung, und
- Fig. 12: eine Schnittansicht durch die zusammengebaute Bremseinrichtung aus Fig. 11.

### Ausführliche Beschreibung der Zeichnung

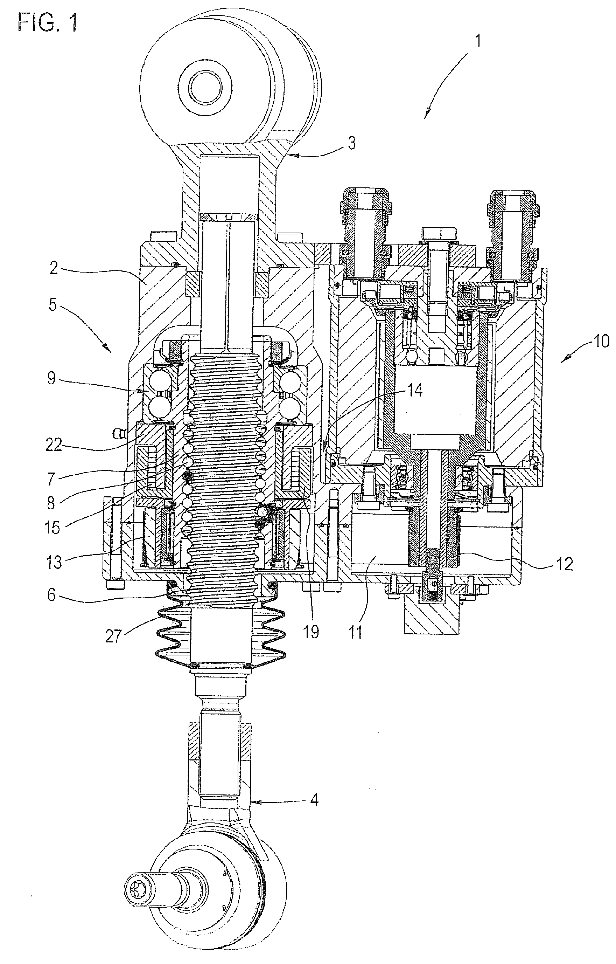

Fig. 1 zeigt einen erfindungsgemäßen Fahrwerksaktuator 1, umfassend ein Gehäuse 2 mit einem ersten Aktuatorbauteil 3 sowie einem relativ zu dem ersten Aktuatorbauteil 3 axial beweglichen zweiten Aktuatorbauteil 4. Das erste Aktuatorbauteil 3 ist im Rahmen der Montage mit einem lagefesten Fahrwerksbauteil zu verbinden, beispielsweise einem Fahrwerksträger oder dergleichen, während das zweite Aktuatorbauteil 4 mit einem zu bewegendem Fahrwerksbauteil, beispielsweise einem Teil der Radaufhängung zum Stellen des Radsturzes oder dergleichen zu verbinden ist. Hierzu sind in an sich bekannter Weise entsprechende Befestigungsmittel respektive Lageraufnahmen vorgesehen.

Zur axialen Verstellung der beiden Aktuatorbauteile 3, 4 relativ zueinander ist ein Kugelgewindetrieb 5 vorgesehen, umfassend eine Gewindespindel 6, die Teil des zweiten Aktuatorbauteils 4 ist oder mit diesem verbunden ist. Auf der über einen Faltenbalg 27 nach außen hin abgedichteten, sich in das Innere des Gehäuses 2 erstreckenden Gewindespindel 6 läuft eine Gewindemutter 7, die über eine Vielzahl von Kugeln 8 geführt ist. Die Gewindemutter 7 ist über ein Lager 9 drehbar, jedoch lagefest im Gehäuse 2 drehgelagert. Zum axialen Verstellen der Gewindespindel 6, die dabei in das Gehäuse 2 oder aus diesem herausbewegt wird, ist ein hier nicht näher beschriebener Antriebsmotor 10, beispielsweise ein einfacher, kleiner Elektromotor vorgesehen, der mit der Mutter 7 über einen hier nur teilweise gezeigten Zahnriemen 11 gekoppelt ist. Hierzu ist am Elektromotor 10 eine Riemenscheibe 12 vorgesehen, über die der Riemen 11 läuft, die Mutter 7 weist ebenfalls eine Riemenscheibe 13 auf, über die der Riemen 11 läuft. Diese Riemenscheibe 13 ist mit einer nachfolgend noch zu beschreibenden Bremseinrichtung verbunden respektive Teil derselben. Je nachdem, in welche Richtung der Elektromotor 10 dreht, dreht sich die Mutter 7 auf der Gewindespindel 6, die dabei entweder in das Gehäuse 2 oder aus dem Gehäuse 2 bewegt wird, wodurch sich die axiale Lage der beiden Aktuatorbauteile 3, 4 relativ zueinander ändert.

Um bei einer Axialverstellung des Aktuatorbauteils 4 in Richtung einer auf dieses Aktuatorbauteil 4 wirkenden Last ein Sperrrucken zu vermeiden, ist im gezeigten Beispiel eine Bremseinrichtung 14 vorgesehen, die in Abhängigkeit der extern einwirkenden fahrwerksseitigen Kraft betätigbar ist, und über die ein der Mutterdrehung entgegenwirkendes Reibmoment aufgebaut wird, das zwischen der Mutter 7 und einem lagefesten Aktuatorelement wirkt. Hierüber kann quasi eine reibgedämpfte Axialbewegung realisiert werden, wobei über den Elektromotor 10 bei einer gewollten Verstellung in Richtung der einwirkenden externen Last das Reibmoment überdrückt wird. Bei ungewollter Stellbewegung, wenn der Elektromotor 10 also steht, wird das Reibmoment so groß, dass es zu einem vollständigen Sperren kommt und mithin die Mutter 7 über die externe Kraft lediglich um einen kleinen, bis zum vollständigen Sperren der Bremseinrichtung möglichen Verdrehwinkel bewegt wird, jedwede Weiterbewegung ist dann gesperrt.

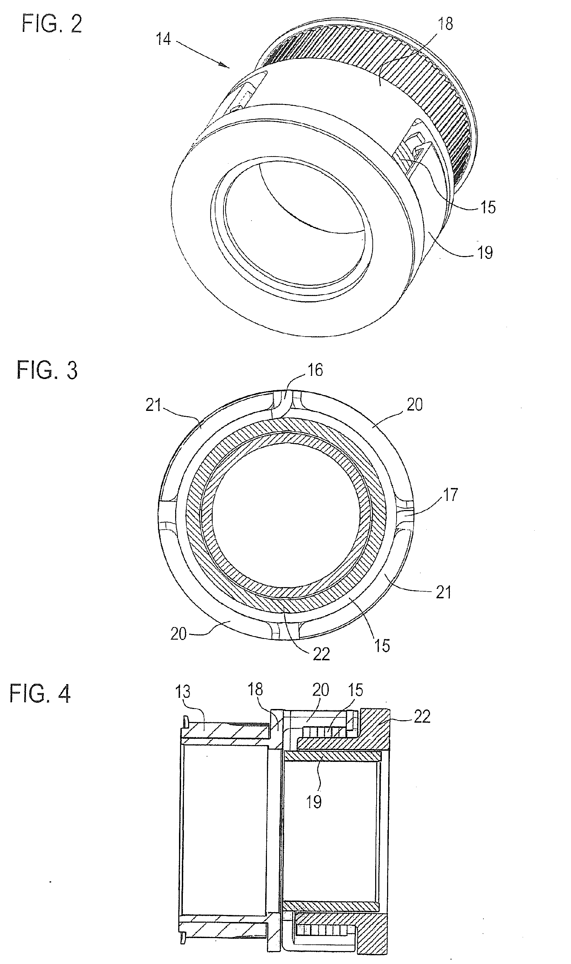

Die Bremseinrichtung 14 ist in den Fig. 2 - 4 im Detail dargestellt. Es handelt sich um eine Schlingfederbremse, umfassend eine Schlingfeder 15, deren beide Enden 16, 17 im gezeigten Ausführungsbeispiel radial nach außen stehend abgewinkelt sind. Die Schlingfeder 15 ist zwischen einem Öffnungselement 18 und einem Schließelement 19 aufgenommen, die beide jeweils zwei Klauen 20 am Öffnungselement 18 bzw. 21 am Schließelement 19 aufweisen, die, siehe Fig. 3, kreisbogenförmig ausgeführt sind und ineinandergreifen. Die beiden Federenden 16, 17 liegen zwischen jeweils einer Klaue 20 und einer Klaue 21. Das Öffnungselement 18 und das Schließelement 19 sind separat zueinander bewegbar. Das Öffnungselement 18 weist die Riemenscheibe 13 auf, über die die Mutter 7 über den Elektromotor 10 gedreht wird. Das Schließelement 19 wird über die externe anliegende Last, sofern eine gegeben ist, gedreht.

Die Bremseinrichtung 14 umfasst ferner einen feststehenden Ring, der das feststehende Aktuatorelement 22 bildet, der lagefest mit dem Lagergehäuse 2 verbunden ist. Dieser Ring ist zylindrisch und wird von der zylindrischen Schlingfeder 15 außenseitig umschlungen.

Soll im Betrieb das zweite Aktuatorbauteil 4 axial bewegt werden, so treibt der Motor 10 über den Riemen 11 die Mutter aktiv an. Hierzu wird zunächst das Schließelement 18 verdreht, was dazu führt, dass die zwischen den beiden Federenden 16, 17 befindliche Klaue 20 je nach Drehrichtung entweder gegen das Federende 16 oder das Federende 17 läuft. Dies führt dazu, dass die Schlingfeder 15 aufgeweitet wird, also ihr Innendurchmesser vergrößert wird, so dass sie definitiv nicht an der Außenfläche des Aktuatorelements 22 anliegt, mithin also dort auch kein Reibmoment aufgebaut wird. Nach Verdrehen um ein definiertes Winkelinkrement wird das Drehmoment vollständig auf die Mutter 7 übertragen, so dass diese gedreht wird und es zur Axialverschiebung der Gewindespindel 6 kommt. Die gegenüberliegende Klaue 20 wird ebenfalls gedreht, ihr kommt jedoch keine Öffnungsfunktion zu, sie ist lediglich aus Gründen der Gewichtssymmetrie vorgesehen.

Wirkt - angenommen, der Elektromotor 10 ist nicht im Betrieb - eine externe Last auf den Fahrwerksaktuator 1, so bewirkt diese Last, dass die Mutter 7 über die belastete Gewindespindel 6 angetrieben wird, dass es also mithin zu einer Axialverstellung der Gewindespindel 6 relativ zur lagefesten Mutter 7 in Lastrichtung kommt. Dies wird über die erfindungsgemäß integrierte Bremseinrichtung 14 jedoch vermieden. Wirkt eine externe Last auf die Bremseinrichtung 14, so führt dies dazu, dass bei unbewegtem Öffnungselement 18 das mit der Mutter 7 verbundene Schließelement 19 bewegt wird. Je nachdem, in welche Richtung diese Drehung erfolgt, greift eine der Klauen 21 entweder am Federende 16 oder am Federende 17 an, was bei Fortsetzung der Drehbewegung dazu führt, dass die Schlingfeder 15 zugezogen wird, mithin also der Innendurchmesser verringert wird und sie sich reibschlüssig mit ihrer Innenseite an die Außenseite des feststehenden Aktuatorelements 22 legt. Mit Erreichen eines definierten Verdrehwinkels ist das Reibmoment so groß, dass die weitere Mutternbewegung vollständig gestoppt ist. Dieser Drehwinkel beträgt nur einige wenige Grad, so dass also eine nennenswerte axiale ungewollte Stellbewegung sofort verhindert wird.

Wirkt bei aktiver Axialverstellung, wenn also der Elektromotor 10 aktiv die Mutter 7 antreibt, eine solche externe Last, so führt dies dazu, dass der Elektromotor 10 kontinuierlich das Öffnungselement 18 öffnet, also die Schlingfeder 15 weitet. Die externe Kraft wirkt dem entgegen, indem die Mutter über diese Kraft ebenfalls aktiv in die gleiche Richtung, wie über den Elektromotor 10 angetrieben, dreht. Dies führt dazu, dass die Klauen 21 des Schließelements 19 die Schlingfeder 15 wiederum zuziehen, mithin also ein Reibmoment aufbauen. Infolge der aktiven Drehung über den Elektromotor 10 kommt es jedoch zu keiner Ruckbewegung, sondern lediglich dazu, dass über das Schließelement 19 kontinuierlich ein gewisses Reibmoment aufgebaut wird, das aber über die aktive Elektromotordrehung "überdreht" wird. Dieses Reibmoment wirkt lediglich dämpfend, jedoch nicht blockierend, so dass eine Ruckbewegung nicht einsetzt. D. h., dass es zu einer gebremsten bzw. gedämpften Axialstellbewegung kommt, also zu einem gebremsten Senken oder Anheben unter gleichgerichteter Last.

Das erzielbare Reibmoment ist einstellbar, einerseits durch eine entsprechende Anpassung des Durchmessers der Schlingfeder 15, andererseits durch geeignete Materialwahl. Es soll letztlich sehr gering sein, da es vom Motor 10 zu überwinden ist.

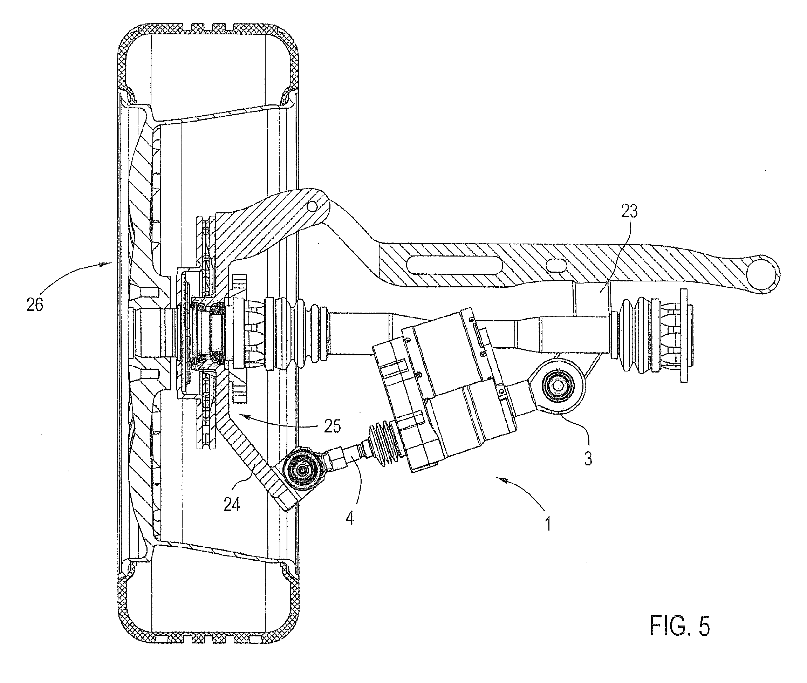

Fig. 5 zeigt ein Montagebeispiel eines erfindungsgemäßen Fahrwerksaktuators 1, der über das erste Aktuatorbauteil mit einem feststehenden Fahrwerksbauteil 23 verbunden ist, während das zweite Aktuatorbauteil 4 mit einem beweglichen Fahrwerksbauteil 24, hier einem Teil des Radlagers 25, verbunden ist. Bei einer Axialbewegung des zweiten Aktuatorbauteils 4 kann das Radlager 25 geschwenkt werden und so der Radsturz des Rades 26 verstellt werden. Dies ist jedoch nur ein Beispiel für eine Anwendungsmöglichkeit des Fahrwerksaktuators, denkbar sind auch andere fahrwerksseitige Einsatzmöglichkeiten zur Durchführung von Stellbewegungen eines beweglichen Fahrwerksbauteils relativ zu einem lagefesten Fahrwerksbauteil.

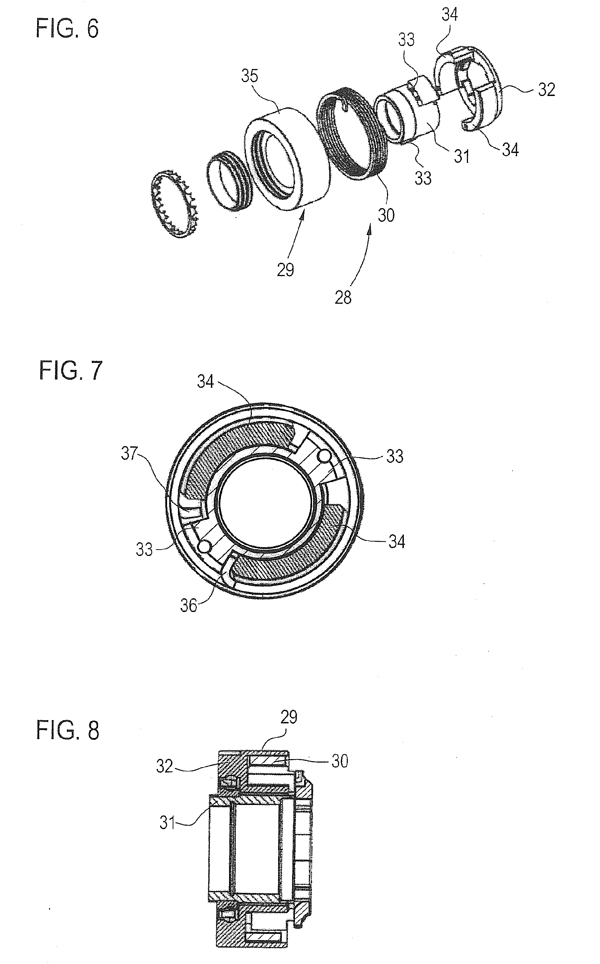

Die Fig. 6 - 8 zeigen eine weitere Ausführungsform einer bei einem Fahrwerksaktuator, wie er in Fig 1 gezeigt ist, verwendbaren bzw. in diesen integrierbaren Bremseinrichtung 28. Diese umfasst ein Gehäuse 29, in dem eine Schlingfeder 30 sowie ein Schließelement 31 und ein Öffnungselement 32 aufgenommen ist. Das Schließelement 31 weist auch hier zwei Klauen 33 auf, während das Öffnungselement 32 zwei Klauen 34 zeigt. Beide Klauenpaare liegen jeweils einander gegenüber, in der Montagestellung greifen sie auch hier ineinander, vgl. Fig. 7. Die Federenden 36 und 37 der Schlingfeder 30 sind hier nach Innen gebogen und sind auch hier zwischen jeweils einer Klaue 33 und einer Klaue 34 aufgenommen. Das Gehäuse 29 bildet hier das feststehende Aktuatorelement 35, gegen dessen Innenfläche die Schlingfeder zur Erwirkung des Bremsmoments anliegt. Im montierten Zustand ist auch hier das Schließelement 31 mit der Mutter 7 (vgl. Fig. 1) verbunden, während das Öffnungselement 32 mit dem Elektromotor 10 (vgl. Fig1) über einen Riemen o.dgl. verbunden ist. Zum Durchführen der Stellbewegung dreht der Elektromotor 10 auch hier das Öffnungselement 32, das mit seiner Klaue 34 gegen eines der Federenden 36, 37 läuft und bei weiterer Verdrehung die Schlingfeder 30 zusammenzieht, so dass sich ihr Außendurchmesser verringert. Damit ist die Schlingfeder 30 nicht in reibschlüssiger Anlage mit der zylindrischen Innenfläche des Gehäuses 29, so dass die Stellbewegung reibfrei erfolgen kann.

Liegt eine äußere Last an, so dreht diese die Mutter 7, worüber das mit der Mutter 7 verbundene Schließelement 31 verdreht wird. Eine seiner Klauen 33 greift an einem der Federenden 36, 37 an, was dazu führt, dass die Schlingfeder 30 aufgebogen wird und sie sich mit ihrer Außenseite an die Innenfläche des Gehäuses 29 reibend anlegt. Es kommt zum Aufbau eines Bremsmoments, das bei ausgeschaltetem Elektromotor 10 so groß wird, dass die Drehung der Mutter 7 vollständig blockiert wird und keine ungewollte Stellbewegung erfolgt.

Wird bei anliegender Last der Elektromotor für eine in Lastrichtung erfolgende Stellbewegung betrieben, so kommt es auch hier zu einem gleichzeitigen Aufbau eines die Stellbewegung dämpfenden, in seiner Höhe von der Höhe der äußeren Kraft abhängigen Reibmoments, jedoch ist die Stellbewegung infolge des die Bremswirkung "überdrückenden" Motortriebs stets möglich. Auch hier kommt es also nicht zu einem Sperrrucken. Die hier gezeigte Ausführung der Bremseinrichtung ist dahingehend von Vorteil, als die nach Innen gerichteten Federenden das Einleiten höherer Kräfte ermöglichen.

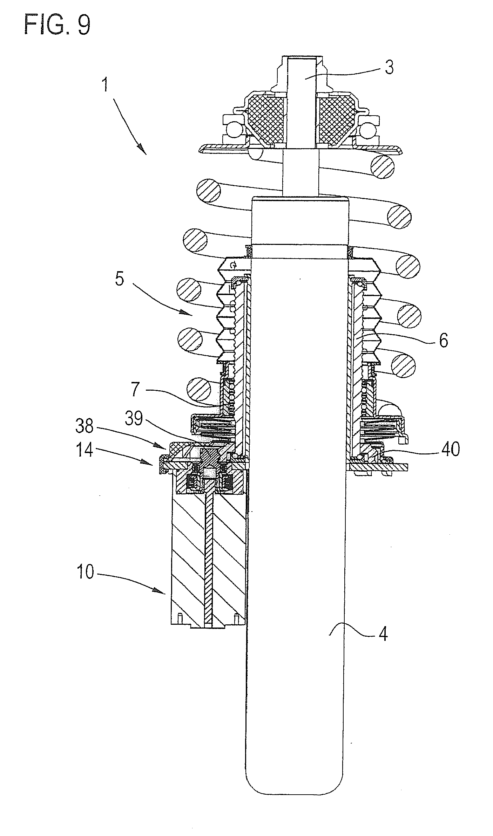

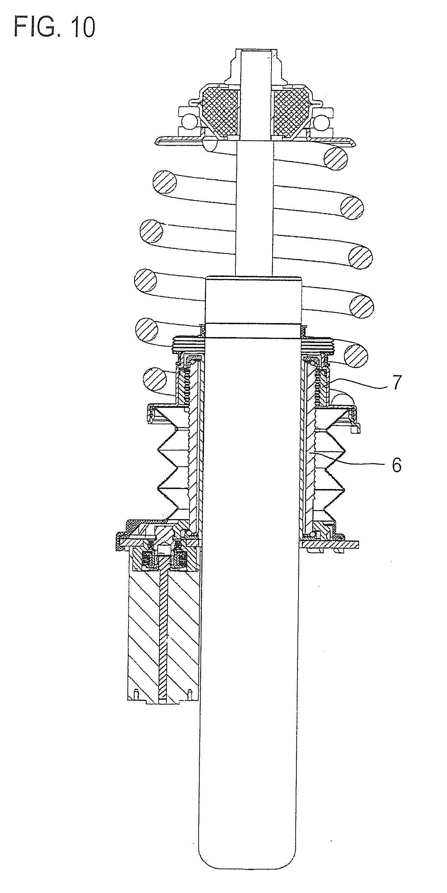

Die Fig. 9 - 12 zeigen eine weitere Ausführungsform eines Fahrwerksaktuators nebst Bremseinrichtung. Der Fahrwerksaktuator 1 ist hier als elektromechanische Niveauregulierung ausgeführt. Er weist ein erstes Aktuatorbauteil 3 und ein zweites Aktuatorbauteil 4 auf, wobei das Aktuatorbauteil 3, siehe Fig. 10, als Kolbenstange ausgeführt ist, die aus dem zylinderartigen Aktuatorbauteil 4 ausgefahren werden kann. Das Aktuatorbauteil 3 ist also das bewegliche Bauteil, das mit dem zu regulierenden Fahrwerksteil verbunden wird.

Auch hier ist ein Kugelgewindetrieb 5 vorgesehen, umfassend eine Mutter 7 und eine Spindel 6, wobei die axial gesehen lagefeste Spindel 6 bei dieser Ausführungsform das über den Antriebsmotor 10 angetriebene Bauteil ist, während infolge der Spindeldrehung die Mutter 5 axial entlang der Spindel 6 bewegt wird, um das Aktuatorbauteil 3, hier also die Stange, axial zu verschieben, siehe hierzu die Fig. 9 und 10.

Auch hier ist eine Bremseinrichtung 14 vorgesehen, wobei diese jedoch nicht, wie bei der Ausgestaltung nach Fig. 1, quasi axial bezogen zu den beiden Aktuatorbauteilen 3, 4 vorgesehen ist, sondern seitlich versetzt dazu. Sie befindet sich in axialer Verlängerung zum Motor 10 und wird, worauf nachfolgend noch eingegangen wird, mit diesem gekoppelt. Über ein Getriebe 38 erfolgt die Bewegungskopplung des Motors 10 mit der Spindel 6, wozu das Getriebe 38 ein Ritzel 39 aufweist, das mit einem entsprechenden Verzahnungsabschnitt 40 an der Spindel 6 kämmt. Nachdem bei dieser Ausführungsform die Spindel 6 das angetriebene Teil des Kugelgewindetriebs 5 ist, erfolgt hier also das Sperren gegen eine externe einwirkende Last zur Vermeidung einer ungewollten Absenk- oder Anhebebewegung über das Getriebe 38 und die Spindel 6, und nicht wie bei der zuvor beschriebenen Ausführungsform über die Mutter.

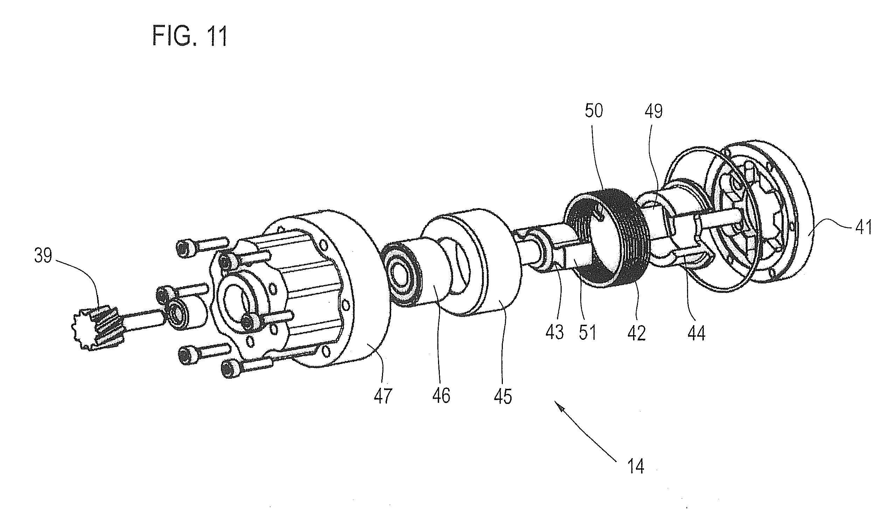

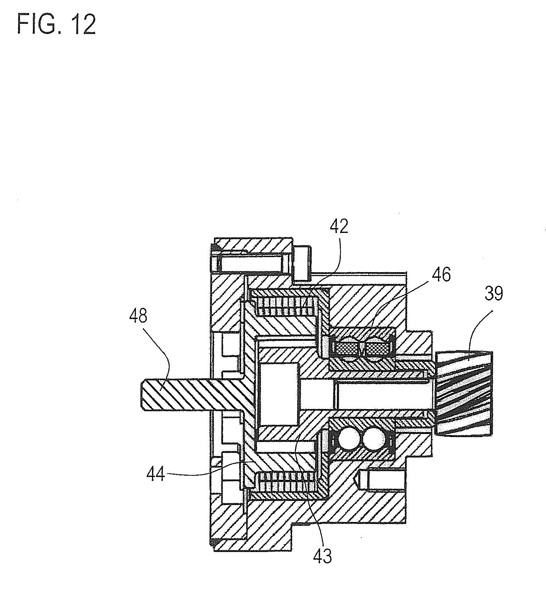

Die Fig. 11 und 12 zeigen eine vergrößerte Darstellung der Bremseinrichtung 14. Diese umfasst eine Adapterplatte 41, über die die Befestigung an dem Antriebsmotor 10 erfolgt. Vorgesehen ist ferner auch hier eine Schlingfeder 42, die auch hier nach innen abgewinkelte Federenden aufweist. Sie wirkt wiederum mit einem Schließer 43 und einem Öffner 44 zusammen, die je nach Betriebssituation die Schlingfeder 42 aus ihrer Reibanlage an die Innenseite einer Hülse 45 ziehen, um sie zu öffnen, oder um sie zum Schließen in der Reibanlage zu bringen. Vorgesehen ist ferner ein Schrägkugellager 46 sowie ein Gehäuse 47, an dem an einer Seite das bereits beschriebene Ritzel 39 angeordnet ist.

Im Betrieb, wenn eine aktive Verstellung der Niveauregulierung erfolgen soll, treibt der Motor über seine Abtriebswelle den Öffner 42 an, der mit der Abtriebswelle über seinen Kopplungszapfen 48 verbunden ist. Der Öffner 42 greift über seine entsprechende Klaue 49 am entsprechenden Federende 50 an, nimmt darüber die Schlingfeder 42 mit, die ihrerseits wiederum den Schließer 43 mitnimmt, der mit dem Getriebe 38 respektive als Teil desselben dem Ritzel 39 gekoppelt ist, das dann mit der Verzahnung 40 der Spindel 6 kämmt, so dass diese dann in die gewünschte, von der Motordrehrichtung definierte Richtung gedreht wird, und infolgedessen die Mutter 7 in der gewünschten axialen Verstellrichtung bewegt wird.

Wirkt über das Aktuatorbauteil eine externe Kraft ein, so ist hier die Spindeldrehung zu sperren, was über das Getriebe 38 bzw. das mit der Spindel 6 gekoppelte Ritzel 39 in Verbindung mit der Bremseinrichtung 14 bzw. der Schlingfeder 42 erfolgt. Wird infolge einer externen einwirkenden Kraft auf die Mutter 7 eine rückdrehende Kraft auf die Spindel 6 aufgebracht, so führt dies dazu, dass über die Verzahnung 40 und das Ritzel 39 umgehend und unmittelbar eine Drehbewegung auf den Schließer 43 gegeben wird. Dieser greift nun mit seiner entsprechenden Klaue 51 am entsprechenden Federende 50 der Schlingfeder an und schließt diese, bringt sie also in reibschlüssige, feste Anlage mit der Hülse 45, die also das Aktuatorelement, das lagefest ist und gegen welches gebremst wird, bildet. Hierüber erfolgt eine unmittelbare, direkte Sperrung der Rückdrehbewegung, nachdem über die Bremseinrichtung 14 jedwede Drehbewegung der Spindel 6 gesperrt wird.

Die Erfindung ist nicht auf die gezeigten Ausgestaltungen beschränkt. Die Fahrwerksaktuatoren können vielmehr beliebige Stellaufgaben übernehmen, also z. B. zur Spurverstellung, zur Sturzverstellung oder zur Niveauregulierung eingesetzt werden.

### Bezugszahlenliste

- 1: Fahrwerksaktuator
- 2: Gehäuse
- 3: Aktuatorbauteil
- 4: Aktuatorbauteil
- 5: Kugelgewindetrieb
- 6: Gewindespindel
- 7: Mutter
- 8: Kugel
- 9: Lager
- 10: Antriebsmotor
- 11: Zahnriemen
- 12: Riemenscheibe
- 13: Riemenscheibe
- 14: Bremseinrichtung
- 15: Schlingfeder
- 16: Federende
- 17: Federende
- 18: Öffnungselement
- 19: Schließelement
- 20: Klaue
- 21: Klaue
- 22: Aktuatorelement
- 23: Fahrwerksbauteil
- 24: Fahrwerksbauteil
- 25: Radlager
- 26: Rad
- 27: Faltenbalg
- 28: Bremseinrichtung
- 29: Gehäuse
- 30: Schlingfeder
- 31: Schließelement
- 32: Öffnungselement
- 33: Klaue
- 34: Klaue
- 35: Aktuatorelement
- 36: Federende
- 37: Federende
- 38: Getriebe
- 39: Ritzel
- 40: Verzahnungsabschnitt
- 41: Adapterplatte
- 42: Schlingfeder
- 43: Schließer
- 44: Öffner
- 45: Hülse
- 46: Schrägkugellager
- 47: Gehäuse
- 48: Kopplungszapfen
- 49: Klaue
- 50: Federende
- 51: Klaue

## Patentansprüche

1. Fahrwerksaktuator (1) zum Stellen eines beweglich gelagerten Bauteils eines Kraftfahrzeugfahrwerks, umfassend ein mit dem beweglich gelagerten Bauteil zu verbindendes erstes Aktuatorbauteil (4) und ein mit einem Iagefesten Fahrwerksbauteil zu verbindendes zweites Aktuatorbauteil, (3) wobei beide Aktuatorbauteile über einen Kugelgewindetrieb (5) umfassend eine Gewindespindel (6) und eine auf dieser laufende Mutter, (7) wobei entweder die Mutter (7) über einen Antriebsmotor (10) zur Axialverstellung der Gewindespindel oder die Spindel (6) über einen Antriebsmotor (10) zur Axialverstellung der Mutter (7) antreibbar ist, axial relativ zueinander verstellbar sind, **dadurch gekennzeichnet, dass** eine durch eine auf die Mutter (7) oder die Spindel (6) wirkende und diese verdrehende externe fahrwerkseitige Kraft betätigbare Bremseinrichtung (14, 28), die ein einer Mutterdrehung oder der Spindeldrehung entgegenwirkendes Reibmoment aufbaut, das zwischen der Mutter (7) oder der Spindel (6) und einem lagefesten Aktuatorelement (22, 35) oder zwischen einer Antriebswelle des Antriebsmotors (10) und einem diesem zugeordneten lagefesten Aktuatorelement (45) wirkt, vorgesehen ist, wobei die Bremseinrichtung (14, 28) eine Schlingfeder (15, 30, 42) umfasst, die zum Aufbauen des Reibmoments das lagefeste zylindrische Aktuatorelement (22, 35, 45) umschlingt, und die mit dem Antriebsmotor (10) zum Lösen der Umschlingung und mit der Mutter (7) oder der Spindel (6) zum Schließen der Umschlingung gekoppelt ist.

2. Fahrwerksaktuator nach Anspruch 1, **dadurch gekennzeichnet, dass** die Schlingfeder (15, 30, 42) zwei abgewinkelte Federenden (16, 17, 36, 37, 50) aufweist, an denen ein über den Antriebsmotor (10) verdrehbares Öffnungselement (18, 32, 44) zum Öffnen der Umschlingung und ein drehfest mit der Mutter (7) oder der Spindel (6) direkt oder indirekt verbundenes Schließelement (19, 31, 43) zum Schließen der Umschlingung angreift.

3. Fahrwerksaktuator nach Anspruch 2, **dadurch gekennzeichnet, dass** das Öffnungselement (18, 32, 44) und das Schließelement (19, 31, 43) jeweils zwei einander gegenüberliegende, vorzugsweise kreisbogenförmige Klauen (20, 21, 33, 34, 50, 51) aufweist, wobei die Klauen (20, 21, 33, 34, 50, 51) beider Elemente (18, 19, 31, 32, 43, 44) mit Umfangsabstand in einander greifen, wobei die beiden Federenden (16, 17, 36, 37, 50) jeweils zwischen zwei Klauen (20, 21, 33, 34, 50, 51) positioniert sind.

4. Fahrwerksaktuator nach einem der vorangehenden Ansprüche, **dadurch gekennzeichnet, dass** die Federenden (16, 17, 36, 37, 50) radial nach innen oder außen abgewinkelt sind.

5. Fahrwerksaktuator nach einem der vorangehenden Ansprüche, **dadurch gekennzeichnet, dass** das lagefeste Aktuatorelement (22, 35, 45) an seiner Außenfläche oder seiner Innenfläche umschlungen ist.

6. Fahrwerksaktuator nach einem der vorangehenden Ansprüche, **dadurch gekennzeichnet, dass** der Antriebsmotor (10) seitlich an einem Gehäuse (2) des Fahrwerksaktuators (1) angeordnet ist und mit der Mutter (7) oder der Spindel (6) über ein Zugmittel, insbesondere einen Riemen (11), oder über ein Getriebe (38) gekoppelt ist.

## Claims

1. Chassis actuator (1) for actuating a movably mounted component of a motor-vehicle chassis, comprising a first actuator component (4) to be connected to the movably mounted component and a second actuator component (3) to be connected to a positionally fixed chassis component, it being possible for both actuator components to be adjusted axially relative to one another via a ball screw drive (5) comprising a threaded spindle (6) and a nut (7) which runs thereon, it being possible either for the nut (7) to be driven via a drive motor (10) for the axial adjustment of the threaded spindle or for the spindle (6) to be driven via a drive motor (10) for the axial adjustment of the nut (7), **characterized in that** a brake device (14, 28) is provided which can be actuated by an external chassis-side force which acts on the nut (7) or the spindle (6) and rotates the said nut (7) or spindle (6), which brake device (14, 28) builds up a frictional moment which counteracts a nut rotation or the spindle rotation and acts between the nut (7) or the spindle (6) and a positionally fixed actuator element (22, 35) or between a drive shaft of the drive motor (10) and a positionally fixed actuator element (45) which is assigned to the said drive motor (10), the brake device (14, 28) comprising a wrap spring (15, 30, 42) which wraps around the positionally fixed cylindrical actuator element (22, 35, 45) in order to build up the frictional moment and is coupled to the drive motor (10) in order to release the wrap-around action and to the nut (7) or the spindle (6) in order to close the wrap-around action.

2. Chassis actuator according to Claim 1, **characterized in that** the wrap spring (15, 30, 42) has two angled-away spring ends (16, 17, 36, 37, 50), on which an opening element (18, 32, 44) which can be rotated via the drive motor (10) acts in order to open the wrap-around action and a closing element (19, 31, 43) which is fixedly connected directly or indirectly to the nut (7) or the spindle (6) so as to rotate with it acts in order to close the wrap-around action.

3. Chassis actuator according to Claim 2, **characterized in that** the opening element (18, 32, 44) and the closing element (19, 31, 43) in each case have two preferably circularly arcuate claws (20, 21, 33, 34, 50, 51) which lie opposite one another, the claws (20, 21, 33, 34, 50, 51) of both elements (18, 19, 31, 32, 43, 44) engaging into one another with a circumferential spacing, the two spring ends (16, 17, 36, 37, 50) being positioned in each case between two claws (20, 21, 33, 34, 50, 51).

4. Chassis actuator according to one of the preceding claims, **characterized in that** the spring ends (16, 17, 36, 37, 50) are angled away radially to the inside or the outside.

5. Chassis actuator according to one of the preceding claims, **characterized in that** the positionally fixed actuator element (22, 35, 45) is wrapped around on its outer face or its inner face.

6. Chassis actuator according to one of the preceding claims, **characterized in that** the drive motor (10) is arranged laterally on a housing (2) of the chassis actuator (1) and is coupled to the nut (7) or the spindle (6) via a traction mechanism, in particular a belt (11), or via a gear mechanism (38).

## Revendications

1. Actionneur de châssis (1) pour la commande d'un composant d'un châssis de véhicule monté mobile, comprenant un premier composant d'actionneur (4) devant être connecté au composant monté mobile et un deuxième composant d'actionneur (3) devant être connecté à un composant du châssis fixé en position, les deux composants d'actionneur pouvant être déplacés axialement l'un par rapport à l'autre par le biais d'une vis à billes (5) comprenant une broche filetée (6) et un écrou (7) déplaçable sur celle-ci, l'écrou (7) pouvant être entraîné par un moteur d'entraînement (10) pour le réglage axial de la broche filetée ou bien la broche (6) pouvant être entraînée par le biais d'un moteur d'entraînement (10) pour le réglage axial de l'écrou (7), **caractérisé en ce qu'**un dispositif de freinage (14, 28) est prévu, pouvant être actionné par une force externe du côté du châssis agissant sur l'écrou (7) ou la broche (6) et faisant tourner celle-ci ou celui-ci, qui crée un couple de friction s'opposant à une rotation de l'écrou ou à une rotation de la broche, lequel couple de friction agit entre l'écrou (7) ou la broche (6) et un élément d'actionneur fixé en position (22, 35) ou entre un arbre d'entraînement du moteur d'entraînement (10) et un élément d'actionneur (45) fixé en position associé à celui-ci, le dispositif de freinage (14, 28) comprenant un ressort enroulé (15, 30, 42) qui, pour créer le couple de friction, enveloppe l'élément d'actionneur cylindrique fixé en position (22, 35, 45), et qui est accouplé au moteur d'entraînement (10) pour libérer l'enveloppement et à l'écrou (7) ou à la broche (6) pour fermer l'enveloppement.

2. Actionneur de châssis selon la revendication 1, **caractérisé en ce que** le ressort enroulé (15, 30, 42) présente deux extrémités de ressort coudées (16, 17, 36, 37, 50) au niveau desquelles vient en prise un élément d'ouverture (18, 32, 44) pouvant tourner par le biais du moteur d'entraînement (10) pour l'ouverture de l'enveloppement et un élément de fermeture (19, 31, 43) connecté directement ou indirectement de manière solidaire en rotation avec l'écrou (7) ou la broche (6) pour la fermeture de l'enveloppement.

3. Actionneur de châssis selon la revendication 2, **caractérisé en ce que** l'élément d'ouverture (18, 32, 44) et l'élément de fermeture (19, 31, 43) présentent chacun deux griffes opposées, de préférence en forme d'arc de cercle (20, 21, 33, 34, 50, 51), les griffes (20, 21, 33, 34, 50, 51) des deux éléments (18, 19, 31, 32, 43, 44) venant en prise les unes dans les autres avec une distance périphérique, les deux extrémités de ressort (16, 17, 36, 37, 50) étant à chaque fois positionnées entre deux griffes (20, 21, 33, 34, 50, 51).

4. Actionneur de châssis selon l'une quelconque des revendications précédentes, **caractérisé en ce que** les extrémités de ressort (16, 17, 36, 37, 50) sont coudées radialement vers l'intérieur ou vers l'extérieur.

5. Actionneur de châssis selon l'une quelconque des revendications précédentes, **caractérisé en ce que** l'élément d'actionneur fixé en position (22, 35, 45) est enveloppé au niveau de sa surface extérieure ou de sa surface intérieure.

6. Actionneur de châssis selon l'une quelconque des revendications précédentes, **caractérisé en ce que** le moteur d'entraînement (10) est disposé latéralement sur un boîtier (2) de l'actionneur de châssis (1) et est accouplé à l'écrou (7) ou à la broche (6) par le biais d'un moyen de traction, en particulier d'une courroie (11), ou par le biais d'une transmission (38).
